# EUROPÄISCHE PATENTSCHRIFT

(11) **EP 2 769 829 B1**
(45) Veröffentlichungstag und Bekanntmachung des Hinweises auf die Patenterteilung: **08.06.2016**
(21) Anmeldenummer: 13155942.9
(22) Anmeldetag: 20.02.2013
(51) Int. Cl.: B29C 51/20, B29C 65/00, B26D 5/14, B30B 1/26, B29C 51/38

(54) **Tiefziehverpackungsmaschine mit Hubeinrichtung, und ein Verfahren**
Deep draw packaging machine with lifting device and a method
Machine d'emballage par emboutissage avec dispositif de levage, et un procédé

(43) Veröffentlichungstag der Anmeldung: 27.08.2014
(60) Teilanmeldung: 15189919.2
(73) Patentinhaber: MULTIVAC Sepp Haggenmüller SE & Co. KG, 87787 Wolfertschwenden (DE)
(72) Erfinder: Streitenberger, Andreas, 87452 Altusried (DE); Ehrmann, Elmar, 87730 Bad Grönenbach (DE); Maier, Robert, 87727 Babenhausen (DE)
(74) Vertreter: Grünecker Patent- und Rechtsanwälte PartG mbB

(56) Entgegenhaltungen:
- WO-A1-2009/141871
- DE-A1-102010 060 818
- US-A- 3 621 532
- US-A- 3 816 052
- US-A1- 2010 269 452
- DATABASE WPI Week 200480 Thomson Scientific, London, GB; AN 2004-809858 XP002710099, -& JP 2004 331109 A (TOYO JIDOKI KK) 25. November 2004 (2004-11-25)

## Beschreibung

Die Erfindung bezieht sich auf eine Tiefziehverpackungsmaschine gemäß dem Oberbegriff des Anspruchs 1 und auf ein Verfahren zum Betrieb einer Tiefziehverpackungsmaschine mit den Merkmalen des Anspruchs 4.

Die DE 10 2010 019 634 A1 offenbart eine motorisch angetriebene Hubeinrichtung für eine Schneidstation einer Tiefziehverpackungsmaschine, die ein Werkzeugunterteil bzw. ein Schneidmesser mittels einer Schubstange angetrieben von einem Motor nach oben an eine Folienbahn heran bewegt. Dabei ist ein Werkzeugoberteil bzw. ein Gegenmesser stationär an der Oberseite der Folienbahn vorgesehen. Die Herstellung von Verpackungen, die Produkte beinhalten, die über die Ebene der Folienbahn überstehen, ist mit dieser Hubeinrichtung nicht möglich.

Die DE 197 34 513 A1 offenbart ein pneumatisch angetriebenes Hubwerk für eine Arbeitsstation einer Tiefziehverpackungsmaschine, wobei das Werkzeugoberteil mit dem Werkzeugunterteil derart über Hebelmechanismen gekoppelt ist, dass eine Aufwärtsbewegung des Werkzeugunterteils von unten an die Folienbahn eine Abwärtsbewegung des Werkzeugoberteils von oben an die Folienbahn zur Folge hat, wobei die Hubbewegung des Werkzeugunterteils ein Mehrfaches der Hubbewegung des Werkzeugoberteils beträgt. Weitere Hubvorrichtungen werden in DE 10 2010 060 818, US 3621532, US 2010 269452, WO 2009 141 871, JP2004 331109 und US 3816052 offenbart.

Aufgabe der vorliegenden Erfindung ist es, Hubwerke in Tiefziehverpackungsmaschinen mit einem Oberhub ohne Verwendung von Druckluft und aufwendigen Hebelmechanismen zur Verfügung zu stellen.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 4. Vorteilhafte Weiterbildungen der Erfindung sind in den Unteransprüchen angegeben.

Die erfindungsgemäße Tiefziehverpackungsmaschine umfasst eine Hubeinrichtung für eine Arbeitsstation in Form einer Schneidstation, wobei die Hubeinrichtung ein Gestell, das an einem Maschinenrahmen angebracht ist, und ein Werkzeugunterteil aufweist, das mit einem Motor mittels einer Schubstange verbunden ist. Die Verpackungsmaschine zeichnet sich dadurch aus, dass
die Hubeinrichtung einen Rahmen aufweist, der senkrecht zu einer Folienbahn und relativ zum Gestell mittels eines Drehelements, das auf der Achse des Motors angebracht ist und mit dem Rahmen in Eingriff steht, bewegbar ist. Die Hubeinrichtung umfasst ein Werkzeugoberteil, das mit dem Rahmen verbunden ist, wobei das Werkzeugoberteil und das Werkzeugunterteil wenigstens temporär gleichzeitig an die zwischen ihnen befindliche Folienbahn heranbewegbar sind. Dies bringt den Vorteil mit sich, dass mittels nur eines Motors eine gekoppelte Bewegung des Werkzeugunterteils und des Werkzeugoberteils an die Folie heran ermöglicht ist. Dabei kann die Hubeinrichtung so gestaltet sein, dass die Werkzeugober- und -unterteile unterschiedliche Hübe ausführen.

Vorzugsweise ist das Drehelement ein Exzenter, wobei die Exzentrizität den Hub der Relativbewegung des Rahmens gegenüber dem Gestell festlegt und damit den Hub des Werkzeugoberteils.

Dabei wirkt das Drehelement bevorzugt in einer Führung mit dem Rahmen zusammen, um eine Zwangsführung mit einem geringen Spiel und hohen aufnehmbaren Kräften bereitzustellen.

I n einer vorteilhaften alternativen Ausführung ist das Drehelement ein Hebel mit einem Führungsbolzen, wobei der Führungsbolzen in einer Führung, die als Kulisse ausgebildet sein kann, mit dem Rahmen zusammenwirkt. Mittels des Hebels ist eine große und einstellbare Exzentrizität ermöglicht, indem der Führungsbolzen unterschiedliche Positionen an dem Hebel einnehmen kann.

Dabei weist die Kulisse bevorzugt eine Bahnführung für den Führungsbolzen auf, um das Werkzeugoberteil temporär während der Bewegung des Hebels relativ zur Folienbahn nicht zu bewegen, d.h. stationär zu halten. Der Vorteil liegt darin, dass beispielsweise bei einer Schneidstation das Werkzeugoberteil als Gegenmesser und das Werkzeugunterteil als Schneidmesser ausgebildet sein können und ein Schneidmesser, das nicht als lineares Messer parallel zur Folienbahn ausgeführt ist, beim ersten Kontakt mit der Folienbahn und während des weiterfolgenden Schneidvorganges die Folienbahn gegen das Gegenmesser drückt. Da das Gegenmesser keine Bewegung gegen die Folienbahn oder von der Folienbahn weg ausführt, wird keine Spannung senkrecht auf die Folienbahn ausgeübt und eine Faltenbildung wird verhindert.

Alternativ weist die Führung eine Bahnführung für den Führungsbolzen auf, um das Werkzeugunterteil teilweise während der Bewegung des Drehelements relativ zur Folienbahn nicht zu bewegen, d.h. stationär zu halten. Dies ermöglicht beispielsweise bei einer Schneidstation den Einsatz eines Gegenmessers als Werkzeugunterteil und eines Schneidmessers als Werkzeugoberteil.

Die Arbeitsstation kann nicht nur eine Schneidstation, sondern auch eine Siegel- und/oder Formstation mit jeweils einem Siegel- bzw. Formwerkzeugoberteil und einem Siegel- bzw. Formwerkzeugunterteil sein.

Zweckmäßig kann es sein, wenn zwischen dem Gestell und dem Rahmen eine Führungseinrichtung vorgesehen ist. Dies ermöglicht es, ein Verkippen oder allgemein eine ungleiche Bewegung des Rahmens entlang der Führungen zu vermeiden. Mit anderen Worten wird so sichergestellt, dass das Werkzeugteil in exakt definierter Ausrichtung auf die Folienbahn trifft. Beispielsweise könnte ein Formwerkzeug oder ein Schneidmesser präzise parallel zur Ebene der Folienbahn ausgerichtet bleiben, wenn das Werkzeugteil auf die Folienbahn trifft.

Das erfindungsgemäße Verfahren zum Betrieb einer Tiefziehverpackungsmaschine mit einer Hubeinrichtung für eine Arbeitsstation, wobei die Hubeinrichtung ein Gestell, das an einem Maschinenrahmen angebracht ist, und ein Werkzeugunterteil umfasst, das mit dem Motor mittels einer Schubstange verbunden ist, zeichnet sich dadurch aus, dass die Hubeinrichtung einen Rahmen aufweist, den der Motor zu einer Bewegung senkrecht zu einer Folienbahn und relativ zum Gestell antreibt. Der Motor bewegt das Werkzeugunterteil nach oben an die Folienbahn, während sich wenigstens teilweise zeitgleich ein Werkzeugoberteil, das mit dem Rahmen verbunden ist, nach unten an die Folienbahn bewegt. Somit findet eine gekoppelte Bewegung sowohl des Werkzeugoberteils als auch des Werkzeugunterteils an die Folienbahn heran mit nur einem Motor statt.

Besonders vorteilhaft wird dabei mittels des Motors als gemeinsamer Antrieb zeitweise das Unterwerkzeug nach oben an die Folienbahn bewegt, während das Werkzeugoberteil temporär gegenüber der Folienbahn stillsteht, d.h. stationär bleibt.

Bevorzugt liegt das Werkzeugoberteil an der Folienbahn an, noch bevor das Werkzeugunterteil die Folienbahn erreicht, so dass beispielsweise bei einer Schneideinrichtung, bei der das Werkzeugoberteil als Gegenmesser ausgeführt sein kann, bereits beim ersten Kontakt des Werkzeugunterteils, das in diesem Fall als Schneidmesser ausgebildet ist, mit der Folienbahn das Gegenmesser als Gegenhalt dient und somit eine Faltenbildung der Folienbahn und in Folge ein ungenauer Schnitt ausgeschlossen wird.

Die Arbeitsstation, für die das Verfahren anwendbar ist, kann eine Formstation, eine Siegelstation und/oder eine Schneidstation sein.

Denkbar ist es auch, dass in der Tiefziehverpackungsmaschine mehrere, gegebenenfalls auch unterschiedliche dieser Arbeitsstationen auf die erfindungsgemäße Weise mit einer Hubeinrichtung ausgestattet sind.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht einer erfindungsgemäßen Tiefziehverpackungsmaschine,
- Fig. 2: eine Hubeinrichtung an einer Querschneideeinrichtung in einer geöffneten Position,
- Fig. 3: die Hubeinrichtung zu Beginn eines Schneidvorganges,
- Fig. 4: die Hubeinrichtung in geschlossener Position,
- Fig. 5: eine erste Variante der Hubeinrichtung in einer geöffneten Position,
- Fig. 6: die Hubeinrichtung von Fig. 5 in Produktionsrichtung,
- Fig. 7: die Hubeinrichtung zu Beginn eines Schneidvorganges,
- Fig. 8: die Hubeinrichtung in geschlossener Position,
- Fig. 9: eine zweite Variante der Hubeinrichtung in einer geöffneten Position für eine Formstation und
- Fig. 10: die Hubeinrichtung von Fig. 9 in geschlossener Position.

Gleiche Komponenten sind in den Figuren durchgängig mit gleichen Bezugszeichen versehen.

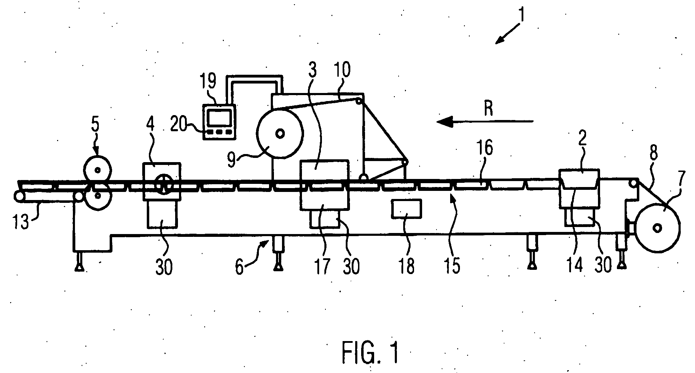

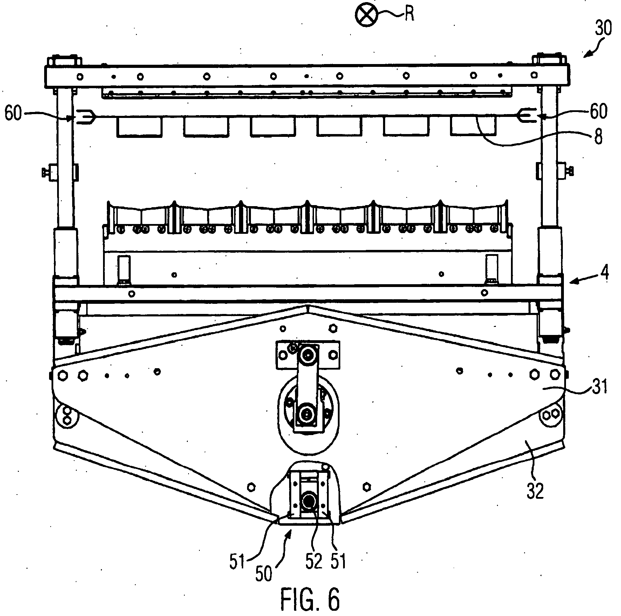

Fig. 1 zeigt in schematischer Ansicht eine erfindungsgemäße Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinenrahmen 6 angeordnet sind. Eingangsseitig befindet sich an dem Maschinenrahmen 6 eine Zufuhrrolle 7, von der eine Folienbahn 8 abgezogen wird. Im Bereich der Siegelstation 3 ist ein Materialspeicher 9 vorgesehen, von dem eine Deckelfolie 10 abgezogen wird. Ausgangsseitig ist an der Tiefziehverpackungsmaschine eine Abfuhreinrichtung 13 in Form eines Transportbandes vorgesehen, mit der fertige, vereinzelte Verpackungen abtransportiert werden. Ferner weist die Tiefziehverpackungsmaschine 1 eine nicht dargestellte Vorschubeinrichtung auf, die die Folienbahn 8 ergreift und diese pro Hauptarbeitstakt in der Produktionsrichtung R weitertransportiert. Die Vorschubeinrichtung kann zum Beispiel durch beidseitig angeordnete Klammerketten 60 (siehe Fig. 6) ausgeführt sein.

In der dargestellten Ausführungsform ist die Formstation 2 als eine Tiefziehstation ausgebildet, bei der in die Folienbahn 8 durch Tiefziehen Mulden 14 geformt werden. Dabei kann die Formstation 2 derart ausgebildet sein, dass in der Richtung senkrecht zur Produktionsrichtung R mehrere Mulden nebeneinander gebildet werden. Die Formstation 2 weist eine Hubeinrichtung 30 auf, um ein Formwerkzeugunterteil nach oben gegen ein Formwerkzeugoberteil in eine Arbeitsposition für den Formprozess zu positionieren. In Produktionsrichtung R hinter der Formstation 2 ist eine Einlegestrecke 15 vorgesehen, in der die in der Folienbahn 8 geformten Mulden 14 mit Produkten 16 befüllt werden.

Die Siegelstation 3 verfügt ebenfalls über eine Hubeinrichtung 30 und über eine verschließbare Kammer 17, in der die Atmosphäre in den Mulden 14 vor dem Versiegeln zum Beispiel durch Evakuieren oder Gasspülen mit einem Austauschgas oder mit einem Gasgemisch ersetzt werden kann.

Die Querschneideeinrichtung 4 umfasst auch eine Hubeinrichtung 30 und ist als Stanze ausgebildet, die die Folienbahn 8 und die Deckelfolie 10 in einer Richtung quer zur Produktionsrichtung R zwischen benachbarten Mulden 14 durchtrennt. Dabei arbeitet die Querschneideeinrichtung 4 derart, dass die Folienbahn 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung mit mehreren rotierenden Rundmessern ausgebildet, mit der die Folienbahn 8 und die Deckelfolie 10 zwischen benachbarten Mulden 14 und am seitlichen Rand der Folienbahn 8 durchtrennt werden, so dass hinter der Längsschneideeinrichtung 5 vereinzelte Verpackungen vorliegen.

Die Tiefziehverpackungsmaschine 1 verfügt ferner über eine Steuerung 18. Sie hat die Aufgabe, die in der Tiefziehverpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in der Folienbahn 8 gebildet. Die Mulden 14 werden zusammen mit dem umgebenden Bereich der Folienbahn 8 in einem Hauptarbeitstakt zu der Einlegestrecke 15 weitertransportiert, in der sie mit Produkten 16 befüllt werden.

Anschließend werden die befüllten Mulden 14 zusammen mit dem sie umgebenden Bereich der Folie 8 in dem Hauptarbeitstakt durch die Vorschubeinrichtung in die Siegelstation 3 weitertransportiert. Die Deckelfolie 10 wird nach einem Ansiegelvorgang an die Folie 8 mit der Vorschubbewegung der Folienbahn 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen, die in den nachfolgenden Schneidungen 4 und 5 vereinzelt und mittels der Abfuhreinrichtung 13 aus der Tiefziehverpackungsmaschine 1 heraus transportiert werden.

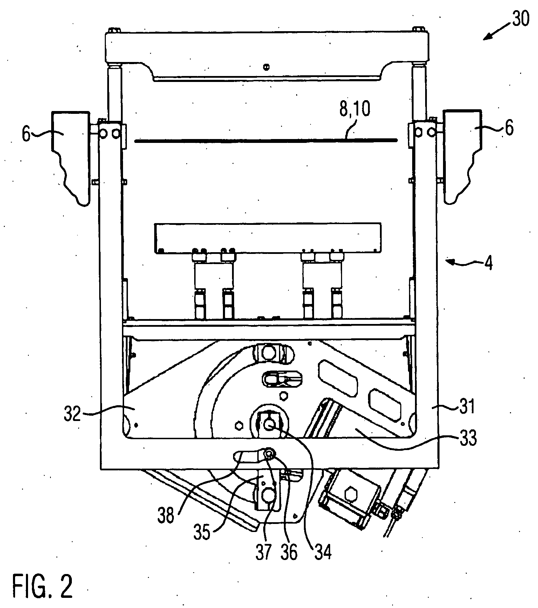

Fig. 2 zeigt die Hubeinrichtung 30 an der Querschneideeinrichtung 4 als Ansicht in Produktionsrichtung R in geöffneter Stellung. Die Hubeinrichtung 30 weist ein Gestell 31 auf, das am Maschinenrahmen 6 angebracht ist und somit an diesem hängt. Ein Rahmen 32 ist mittels nicht näher dargestellter Führungen relativ zum Gestell 31 vertikal bewegbar. Ein Motor 33, vorzugsweise ein Getriebemotor, ist am Rahmen 32 angebracht, wobei seine Achse 34 in Produktionsrichtung R ausgerichtet ist. An der Achse 34 ist ein Drehelement 35 in Form eines Hebels angebracht und ein Führungsbolzen 36, der an dem Drehelement 35 vorgesehen ist, mit einem Kugellager 37 steht mit einer Führung 38, die als Kulisse ausgebildet ist, im Gestell 31 derart in Verbindung, dass eine Drehung des Motors 33 zu einer Bewegung des Führungsbolzens 36 in der Führung 38 führt und damit eine Relativbewegung des Rahmens 32 zum Gestell 31 zur Folge hat. Die Führung 38 weist keinen linearen Verlauf, sondern eine Kontur auf, die bewirkt, dass eine Drehung des Drehelements 35 temporär keine Relativbewegung des Rahmens 32 gegenüber dem Maschinenrahmen 6 und damit der Folienbahn 8 zur Folge hat, d.h. dass der Rahmen 32 trotz weiterer Drehung des Drehelements 35 temporär stationär bleibt relativ zum Gestell 31. Dazu folgen weiter unten genauere Einzelheiten.

Die Deckelfolie 10 ist hier schon an die Folienbahn 8 angesiegelt und liegt somit an der Folienbahn 8 an. Im Folgenden wird daher vereinfachend nur auf die Folienbahn 8 Bezug genommen.

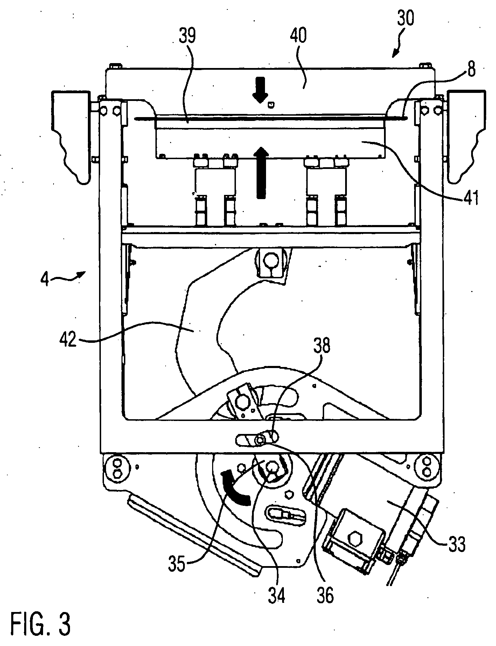

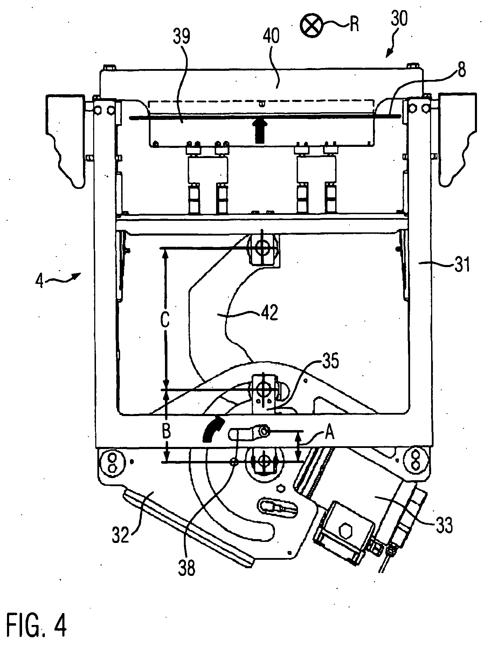

Im Folgenden wird anhand der Figuren 3 und 4 der Bewegungsablauf der Hubeinrichtung 30 näher erläutert. Fig. 3 zeigt die Hubeinrichtung 30 in einer Lage, in der ein Schneidmesser 39, auch allgemein als Werkzeugunterteil benennbar, und ein Gegenmesser 40, auch allgemein als Werkzeugoberteil benennbar, sich an der Folienbahn 8 befinden. Das Schneidmesser 39 ist wechselbar auf einem Träger 41 angebracht und der Träger 41 wird durch die Drehbewegung (siehe gebogenen Pfeil) des Motors 33 über das Drehelement 35 und eine Schubstange 42 in Richtung Folienbahn 8 angehoben (siehe Pfeil). Bei dieser Drehbewegung des Motors 33 bewegt sich das Gegenmesser 40 bzw. der Rahmen 32 gegenüber dem Gestell 31 nach unten (siehe Pfeil) an die Folienbahn 8 heran.

Die Kontur der Führung 38 weist einen Verlauf auf, der dazu führt, dass ab der in Fig. 3 gezeigten Stellung das Gegenmesser 40 an der Folienbahn 8 anliegt und bis zu der in Fig. 4 gezeigten Lage das Gegenmesser 40 an der Folienbahn 8 weiterhin anliegt, ohne sich relativ zu ihr zu bewegen, während das Schneidmesser 39 den weiteren Schneidvorgang ausführt. Konkret weist die Führung 38 einen linken, ersten Abschnitt und einen rechten, zweiten Abschnitt auf. Der erste Abschnitt verläuft etwa horizontal. Solange sich der Führungsbolzen 36 des Drehelements 35 entlang dieses ersten Abschnitts bewegt, führt dies zu einer Relativbewegung des Rahmens 32 relativ zum Gestell 31. Zu der in Figur 3 gezeigten Situation hat der Führungsbolzen 36 gerade den Übergang vom ersten Abschnitt zum zweiten Abschnitt der Führung 38 erreicht. Der Verlauf der Führung 38 in diesem zweiten Abschnitt entspricht dem Radius des Führungsbolzens 36 des Drehelements 35 um die Achse 34. Somit kann der Rahmen 32 seine Lage zum Gestell 31 trotz einer weiteren Drehung des Drehelements 35 beibehalten, d.h. stationär bleiben relativ zum Gestell 31. Der Motor 33 dreht sich weiter und das Schneidmesser 39 wird über die Folienbahn 8 bzw. in die Folienbahn 8 weiterbewegt. Das Gegenmesser 40 weist eine nicht näher dargestellte Ausnehmung auf, die ein Eintauchen das Schneidmessers 39 in das Gegenmesser 40 beim Schneidvorgang ermöglicht.

In Fig. 4 ist die geschlossene bzw. oberste Stellung der Hubeinrichtung 30 gezeigt. Das Schneidmesser 39 hat dabei die Folienbahn 8 quer zur Produktionsrichtung R soweit wie durch die Kontur des Schneidmessers 39 vorgegeben durchtrennt. Dadurch, dass das Gegenmesser 40 zu Beginn und bis zum Ende des Schneidvorganges bündig an der Folienbahn 8 anliegt, kommt es zu keiner Faltenbildung und zu keinem Verzug der Folienbahn 8 und ein exakter Schnitt wird ermöglicht. Anschließend werden die Werkzeuge 39, 40 durch eine gegenläufige Drehbewegung des Motors 33 wieder auseinander in ihre offene Grundstellung gemäß Fig. 2 bewegt. Auch bei dieser Bewegung der Werkzeuge 39, 40 wird die Folienbahn 8 weder nach unten, noch nach oben gedrückt.

Die Höhe der vertikalen Hubbewegung des Gegenmessers 40 wird zum einen über den Abstand A des Bolzens 36 zur Achse 34 des Motors 33 bestimmt, welches einer Exzentrizität entspricht, und zum anderen über den Verlauf der Führung 38. Die Höhe der vertikalen Hubbewegung des Schneidmessers 39 wird zum einen über die Hebelabstände B und C des Drehelements 35 und der Schubstange 42 bestimmt und zum anderen durch die gegenläufige Relativbewegung des Rahmens 32 zum Gestell 31.

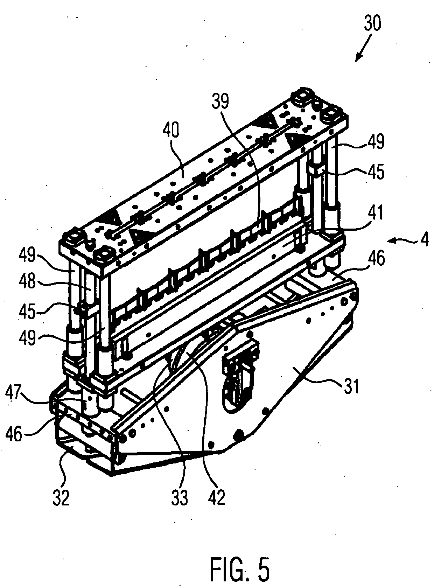

In den Figuren 5 bis 8 ist eine erste Variante der Hubeinrichtung 30 für eine Querschneideeinrichtung 4 gezeigt. Der Unterschied zu der Ausführung, wie sie in Fig. 2 bis 4 gezeigt ist, bezieht sich auf die Ausführung der Relativbewegung des Rahmens 32 zum Gestell 31. Das Gestell 31 ist mittelbar über Halter 45 und direkt über Halter 46 beidseitig am nicht näher dargestellten Maschinenrahmen 6 angebracht. Der Rahmen 32 ist mittels einer Führung 47 vertikal und gegenüber dem Gestell 31 bewegbar. Der Rahmen 32 ist über die Führungsstange 48 mit dem Werkzeugoberteil 40, das als Gegenmesser ausgeführt ist, verbunden und das Werkzeugoberteil 40 ist an den Rahmen 32 und dessen Bewegung gekoppelt. Das Schneidmesser 39 ist auf dem Träger 41 angeordnet und der Träger 41 ist beidseitig auf je zwei Führungssäulen 49 geführt und vertikal bewegbar. Die Bewegung des Trägers 41 wird vom Motor 33 mittels des hier nicht sichtbaren Drehelements 35 und der Schubstange 42 auf den Träger 41 übertragen.

Fig. 6 zeigt die Hubeinrichtung 30 in geöffneter Position als Ansicht in Produktionsrichtung R. Zusätzlich zur Führung 47 des Rahmens 32 ist dieser über eine Führungseinrichtung 50 gegenüber dem Gestell 31 geführt. Die Führungseinrichtung 50 zeigt zwei parallel zueinander angeordnete und am Rahmen 32 angeordnete Leisten 51 auf, zwischen denen ein Bolzen 52 geführt ist, wobei der Bolzen mit dem Gestell 31 verbunden ist. Auf dem Bolzen 52 kann auch eine Buchse aus einem gleitfähigen Werkstoff oder ein Kugellager aufgebracht sein. Die Folienbahn 8 ist von zwei beidseitig angeordneten und nur schematisch dargestellten Klammerketten 60 gehalten und ist in Produktionsrichtung R intermittierend transportierbar.

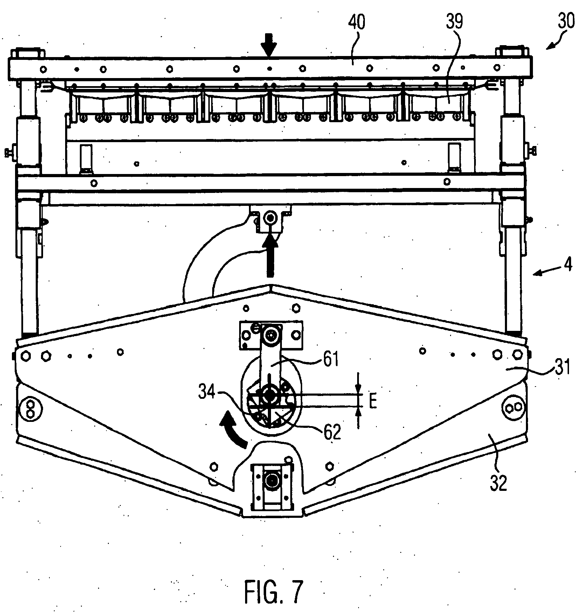

Fig. 7 zeigt die Hubeinrichtung 30 in der Position, in der sich das Gegenmesser 40 von oben und das Schneidmesser 39 so an die Folienbahn 8 angenähert haben, dass das Gegenmesser 40 an der Folienbahn 8 anliegt und das Schneidmesser 39 beginnt, in die Folienbahn 8 einzudringen und den Schneidvorgang zu beginnen. Dies kann bezüglich des Schneidmessers 39 durch Einstellungen des in dieser Ansicht verdeckten Drehelements 35 auf der Achse 34 des in dieser Ansicht verdeckten Motors 33 und bezüglich des Rahmens 32 und damit des Gegenmessers 40 über die Lage und Exzentrizität E eines Exzenters 62 als Drehelement zur Achse 34 angepasst werden. Über einen Hebel 61 und den Exzenter 62 wird die Drehung der Achse 34 des Motors 33 in eine Relativbewegung des Rahmens 32 gegenüber dem Gestell 31 umgesetzt. Je größer dabei die Exzentrizität E, die ein radialer Abstand der Achse 34 des Motors 33 zur Aufnahmeachse des Hebels 61 am Exzenter 62 ist, gewählt wird, desto größer ist die Hubbewegung (siehe oberer und unterer kurzer Pfeil), die das Gegenmesser 40 ausführt.

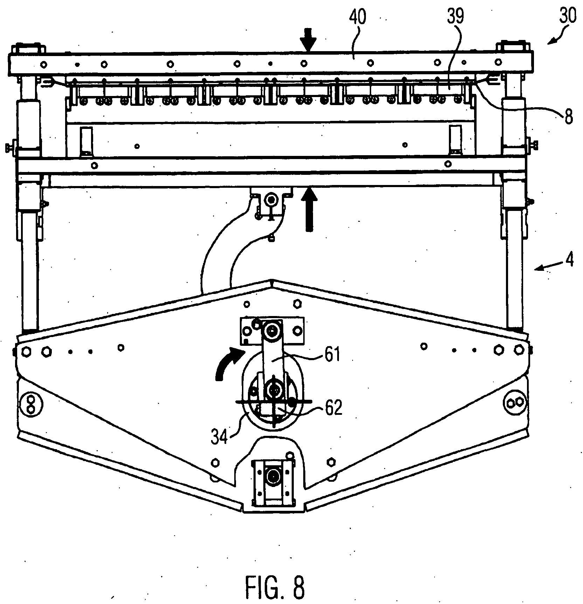

In Fig. 8 ist die Hubeinrichtung in ihrer geschlossenen Stellung am Ende des Schneidvorganges gezeigt, bei der das Schneidmesser 39 die Folienbahn 8 entsprechend der Schneidlinie geschnitten hat und dabei in das Gegenmesser 40 eingetaucht ist. Bei dieser Konfiguration hat das Gegenmesser 40 die Folienbahn 8 gegenüber der Stellung von Fig. 7 etwas nach unten bewegt (siehe oberen Pfeil) und übt dabei Druck auf die Folienbahn 8 aus. Diese Hubbewegung lässt sich minimieren, indem die Lage des Exzenters 62 auf der Achse 34 so verändert wird, dass zum Ende der Hubbewegung des Schneidmessers 39 das Gegenmesser 40 bereits eine kleine Bewegung nach unten gegen die Folienbahn 8 und wieder zurück nach oben ausführt, um dann am Ende der Bewegung an der Folienbahn 8 ohne Druck anzuliegen. Somit kann die Hubbewegung, die zum Auslenken der Folienbahn 8 führt, etwa halbiert werden und es erfolgt nur ein minimales Auslenken der Folienbahn 8. Bei einem Einsatz dieser Hubeinrichtung 30 als Hubwerk in einer Formstation 2 oder Siegelstation 3 ist eine solche Auslenkung unkritisch.

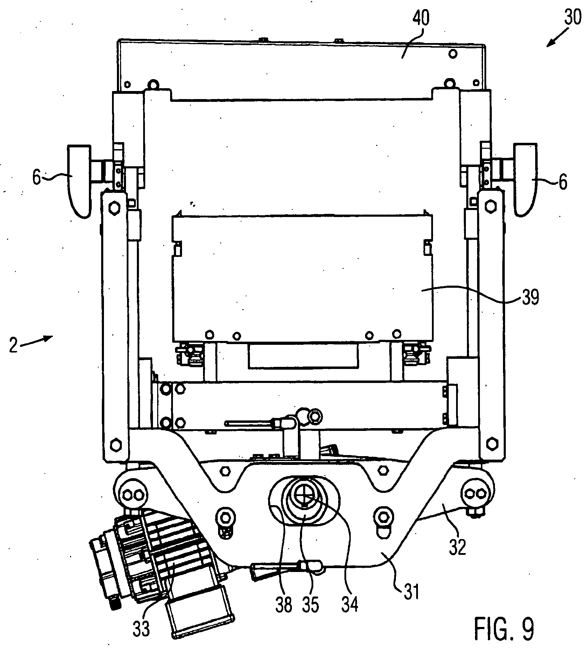

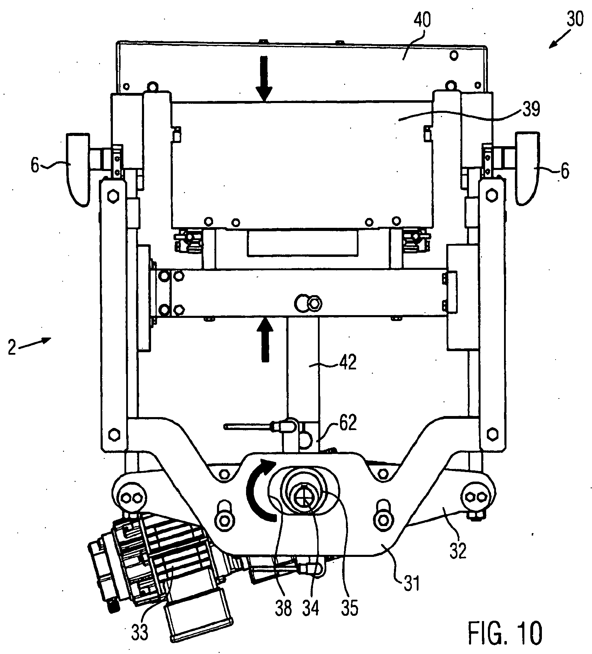

Fig. 9 zeigt eine zweite Variante einer Hubeinrichtung 30 am Beispiel einer Formstation 2. Das Werkzeugunterteil 39 ist als Formwerkzeugunterteil und das Werkzeugoberteil 40 als Formwerkzeugoberteil ausgeführt. Wie die Hubeinrichtungen 30 der Figuren 2 bis 8 ist diese Hubeinrichtung 30 auch am Maschinenrahmen 6 angebracht. Der Motor 31 ist wie bei den vorigen Varianten am Rahmen 32 angebracht, und auf der Achse 34 ist ein Drehelement 35 in Form einer Exzenterscheibe angeordnet, wobei das Drehelement 35 in einer Führung 38 gelagert ist. Eine Drehung des Drehelements 35 bewirkt eine Relativbewegung des Rahmens 32 gegenüber dem Gestell 31. Die Drehbewegung der Achse 34 bewirkt über einen Hebel 62 und eine Schubstange 42 (siehe Fig. 10), die als Kniehebel wirken, eine Hubbewegung des Werkzeugunterteils 39.

Ausgehend von den hier dargestellten Ausführungsbeispielen kann die erfindungsgemäße Tiefziehverpackungsmaschine in vielfacher Hinsicht verändert werden. Beispielsweise wäre es möglich, den Motor 33 nicht am Rahmen 32, sondern am Gestell 31 zu montieren.

## Patentansprüche

1. Tiefziehverpackungsmaschine (1) mit einer Schneidstation (4) und einer Hubeinrichtung (30) für die Schneidstation (2, 3, 4), wobei die Hubeinrichtung (30) ein Gestell (31), das an einem Maschinenrahmen (6) angebracht ist, und ein Schneidmesser als Werkzeugunterteil (39) umfasst, das mit einem Motor (33) mittels einer Schubstange (42) verbunden ist, **dadurch gekennzeichnet, dass** die Hubeinrichtung (30) einen Rahmen (32) aufweist, der senkrecht zu einer Folienbahn (8) und relativ zum Gestell (31) mittels eines als Exzenter (62) ausgebildeten Drehelements (35), das auf der Achse (34) des Motors (33) angebracht ist und mit dem Rahmen (32) in Eingriff steht, bewegbar ist, und dass die Hubeinrichtung (30) ein Gegenmesser als Werkzeugoberteil (40) umfasst, das mit dem Rahmen (32) verbunden ist,
wobei der Exzenter (62) in einer solchen Lage auf der Achse (34) des Motors (33) angebracht ist, dass das Gegenmesser (40) eine Bewegung nach unten gegen die Folienbahn (8) und wieder zurück nach oben ausführt, während sich das Schneidmesser (39) dem Ende seiner Hubbewegung nähert.

2. Tiefziehverpackungsmaschine nach Anspruch 1, **dadurch gekennzeichnet, dass** der Exzenter (62) in einer Führung (38) mit dem Rahmen (32) zusammenwirkt.

3. Tiefziehverpackungsmaschine nach Anspruch 1, **dadurch gekennzeichnet, dass** zwischen dem Gestell (31) und dem Rahmen (32) eine Führungseinrichtung (50) vorgesehen ist.

4. Verfahren zum Betrieb einer Tiefziehverpackungsmaschine (1) mit einer Schneidstation (4) und einer Hubeinrichtung (30) für die Schneidstation (4), wobei die Hubeinrichtung (30) ein Gestell (31) umfasst, das an einem Maschinenrahmen (6) angebracht ist, und ein als Schneidmesser ausgebildetes Werkzeugunterteil (39) umfasst, das mit einem Motor (33) mittels einer Schubstange (42) verbunden ist, **dadurch gekennzeichnet, dass** die Hubeinrichtung (30) einen Rahmen (32) aufweist, den der Motor (33) mittels eines auf einer Achse (34) des Motors (33) angebrachten Exzenters (62) zu einer Bewegung senkrecht zu einer Folienbahn (8) und relativ zum Gestell (31) antreibt,
und wobei der Motor (33) das Werkzeugunterteil (39) nach oben an die Folienbahn (8) bewegt, während sich wenigstens temporär zeitgleich ein als Gegenmesser ausgebildetes Werkzeugoberteil (40), das mit dem Rahmen (32) verbunden ist, nach unten an die Folienbahn (8) bewegt
wobei ferner bedingt durch die Lage des Exzenters (62) auf der Achse (34) des Motors (33) das Gegenmesser eine Bewegung nach unten gegen die Folienbahn (8) und wieder zurück nach oben ausführt, während sich das Schneidmesser (39) dem Ende seiner Hubbewegung nähert.

5. Verfahren nach Anspruch 4, **dadurch gekennzeichnet, dass** das Werkzeugoberteil (40) an der Folienbahn (8) anliegt, noch bevor das Werkzeugunterteil (39) die Folienbahn (8) erreicht.

## Claims

1. Deep-drawing packaging machine (1) with a cutting station (4) and a lifting device (30) for the cutting station (2, 3, 4), wherein said lifting device (30) comprises a stand (31) mounted to a machine frame (6) and a cutting knife as a lower tool part (39) connected to a motor (33) by means of a push rod (42), **characterized in that** said lifting device (30) comprises a frame (32) which is movable perpendicularly to a film web (8) and relatively to said stand (31) by means of a rotary element (35) configured as an eccentric (62) which is mounted on the axis (34) of the motor (33) and is engaged with said frame (32), and that said lifting device (30) comprises a counter knife as an upper tool part (40) connected to the frame (32),
wherein the eccentric (62) is mounted in such a position on the axis (34) of the motor (33) that the counter knife (40) performs a movement downwards against the film web (8) and back upwards again while the cutting knife (39) approaches the end of its lifting movement.

2. Deep-drawing packaging machine according to claim 1, **characterized in that** said eccentric (62) cooperates with the frame (32) in a guide (38).

3. Deep-drawing packaging machine according to claim 1, **characterized in that** a guiding facility (50) is provided between the stand (31) and the frame (32).

4. Method of operating a deep-drawing packaging machine (1) with a cutting station (4) and with a lifting device (30) for the cutting station (4), wherein said lifting device (30) comprises a stand (31) which is mounted to a machine frame (6) and a lower tool part (39) configured as a cutting knife which is connected with a motor (33) by means of a push rod (42), **characterized in that** said lifting device (30) comprises a frame (32) which is driven by the motor (33) by means of an eccentric (62) mounted on an axis (34) of the motor (33) to perform a movement perpendicular to a film web (8) and relative to said stand (31),
and **in that** said motor (33) moves the lower tool part (39) upwards to the film web (8) while an upper tool part (40) configured a counter knife, which is connected to the frame (32), at least temporarily simultaneously moves downwards to the film web (8),
wherein further, due to the position of the eccentric (62) on the axis (34) of the motor (33), the counter knife performs a movement downwards against the film web (8) and back upwards again, while the cutting knife (39) approaches the end of its lifting movement.

5. Method according to claim 4, **characterized in that** the upper tool part (40) is resting against the film web (8) before the lower tool part (39) reaches the film web (8).

## Revendications

1. Machine d'emballage par emboutissage ou thermoformage (1), comprenant un poste de découpage (4) et un dispositif de déplacement de levage (30) pour le poste de découpage (2, 3, 4), le dispositif de déplacement de levage (30) comportant un châssis (31), qui est placé sur un bâti de machine (6), et un système de lame de coupe en guise de partie inférieure d'outillage (39), qui est relié à un moteur (33) au moyen d'une tige de poussée (42), **caractérisée en ce que** le dispositif de déplacement de levage (30) présente un cadre (32) qui peut être déplacé perpendiculairement à une bande de feuille (8) et par rapport au châssis (31), au moyen d'un élément de rotation (35) réalisé en tant qu'excentrique (62), qui est agencé sur l'axe (34) du moteur (33) et est en prise avec le cadre (32), et **en ce que** le dispositif de déplacement de levage (30) comprend un système de lame de coupe conjugué en guise de partie supérieure d'outillage (40), qui est relié au cadre (32),
l'excentrique (62) étant agencé sur l'axe (34) du moteur (33) de manière telle, que le système de lame de coupe conjugué (40) effectue un mouvement vers le bas contre la bande de feuille (8) et à nouveau en retour vers le haut, pendant que le système de lame de coupe (39) se rapproche de la fin de son mouvement de déplacement de levage.

2. Machine d'emballage par emboutissage ou thermoformage selon la revendication 1, **caractérisée en ce que** l'excentrique (62) coopère avec le cadre (32) dans un guidage (38).

3. Machine d'emballage par emboutissage ou thermoformage selon la revendication 1, **caractérisée en ce qu'**entre le châssis (31) et le cadre (32) est prévu un dispositif de guidage (50).

4. Procédé pour assurer le fonctionnement d'une machine d'emballage par emboutissage ou thermoformage (1), comprenant un poste de découpage (4) et un dispositif de déplacement de levage (30) pour le poste de découpage (4), le dispositif de déplacement de levage (30) comportant un châssis (31), qui est placé sur un bâti de machine (6), et une partie inférieure d'outillage (39) sous forme de système de lame de coupe, qui est reliée à un moteur (33) au moyen d'une tige de poussée (42), **caractérisé en ce que** le dispositif de déplacement de levage (30) présente un cadre (32) que le moteur (33) entraîne en un mouvement perpendiculaire à une bande de feuille (8) et par rapport au châssis (31), au moyen d'un excentrique (62) placé sur un axe (34) du moteur (33),
**en ce que** le moteur (33) déplace la partie inférieure d'outillage (39) vers le haut contre la bande de feuille (8) pendant que, au moins temporairement de manière simultanée, une partie supérieure d'outillage (40) réalisée sous forme de système de lame de coupe conjugué, qui est reliée au cadre (32), se déplace vers le bas contre la bande de feuille (8),
et **en ce que**, par ailleurs, en raison de la position de l'excentrique (62) sur l'axe (34) du moteur (33), le système de lame de coupe conjugué effectue un mouvement vers le bas contre la bande de feuille (8) et à nouveau en retour vers le haut, pendant que le système de lame de coupe (39) se rapproche de la fin de son mouvement de déplacement de levage.

5. Procédé selon la revendication 4, **caractérisé en ce que** la partie supérieure d'outillage (40) s'appuie sur la bande de feuille (8) avant même que la partie inférieure d'outillage (39) atteigne la bande de feuille (8).
